# EUROPÄISCHE PATENTSCHRIFT

(11) **EP 1 911 381 B1**
(45) Veröffentlichungstag und Bekanntmachung des Hinweises auf die Patenterteilung: **10.02.2010**
(21) Anmeldenummer: 07118052.5
(22) Anmeldetag: 08.10.2007
(51) Int. Cl.: A47J 31/36, A47J 31/46

(54) **Brüheinheit für eine Kaffeemaschine sowie Kaffeemaschine mit einer solchen Brüheinheit**
Brewing unit for a coffee machine and coffee machine with such a brewing unit
Unité d'échaudage pour une machine à café ainsi que machine à café dotée d'une telle unité d'échaudage

(30) Priorität: 12.10.2006 DE 202006015652 U
(43) Veröffentlichungstag der Anmeldung: 16.04.2008
(73) Patentinhaber: WIK Far East Ltd., North Point, Hong Kong (CN)
(72) Erfinder: Meuer, Jens Martin, 47269 Duisburg (DE)
(74) Vertreter: Haverkamp, Jens

(56) Entgegenhaltungen:
- EP-A- 0 561 741
- US-A- 5 228 383

## Beschreibung

Die Erfindung betrifft eine Brüheinheit für eine Kaffeemaschine mit einem Heißwasseranschluss und einem gegenüber dem Heißwasseranschluss motorisch im Rahmen des Durchlaufens eines Brühzyklusses angetriebenen Elements, etwa einem Brühzylinder, an welchen Heißwasseranschluss eine Heißwasserleitung zum Zuführen von der Brüheinheit zugeführtem Heißwasser in eine Brühkammer angeschlossen ist. Ferner betrifft die Erfindung eine Kaffeemaschine mit einer solchen Brüheinheit.

Eine solche Kaffeemaschine ist in Dokument US 5 228 383 A beschrieben.

Kaffeemaschinen, mit denen portionsweise, beispielsweise tassenweise, frisch gebrühter Kaffee bereitet werden kann, verfügen über eine Brüheinheit. Diese umfasst einen Brühzylinder, in die nach dem Starten eines Brühzyklus gemahlenes Kaffeepulver eingebracht, darin verdichtet und anschließend Heißwasser hindurch geführt wird, bevor das ausgelaugte Kaffeemehl aus dem Brühzylinder ausgestoßen wird. Je nach Konzeption der Brüheinheit verfügt diese über zumindest zwei bewegliche Elemente, wobei es sich bei diesen um zwei gegeneinander bewegliche Kolben oder um einen Kolben und einen Brühzylinder handeln kann. Es sind auch Brüheinheiten bekannt geworden, in denen sowohl die beiden Kolben als auch der Brühzylinder gegeneinander beweglich sind. Zum Bewegen der vorgenannten Elemente der Brüheinheit dient eine Antriebseinrichtung, deren Antriebskraft auf eines oder mehrere der bewegbaren Elemente wirkt. Zum Zuführen des Heißwassers dient eine innerhalb der Kaffeemaschine angeordnete Pumpe. An die Pumpe angeschlossen ist eine Heißwasserzuführung. Ist die Brüheinheit aus der Kaffeemaschine herausnehmbar, ist in die Heißwasserzuführung eine Leitungskupplung eingeschaltet. Die Heißwasserzuführung mündet in die Brühkammer zumeist über einen der beiden Kolben, oftmals über dessen mit einer Siebplatte ausgerüsteten Kolbenboden. Zum Auslassen des gebrühten Kaffees trägt der die Brühkammer in der Brühstellung des Brühzylinders ausgangsseitig begrenzende Gegenkolben eine Siebplatte. Unmittelbar in Strömungsrichtung hinter der Siebplatte befindet sich ein Sammler, von dem eine Kaffeeauslaufleitung abgeht. In die Kaffeeauslaufleitung ist typischer Weise ein Crema-Ventil eingeschaltet. Durch das Crema-Ventil ist die Auslaufleitung grundsätzlich verschlossen. Das Crema-Ventil öffnet bei Überschreiten eines vorbestimmten Druckes. Dieses gewährleistet, dass aus der Brühkammer nur dann das gebrühte Kaffeegetränk ausfließt, wenn in dieser wenigstens der zum Öffnen des Crema-Ventils notwendige Druck herrscht. Beim Hindurchtreten des gebrühten Kaffeegetränks durch das Crema-Ventil erhält der gebrühte Espresso die gewünschte schaumartige Crema.

Die vorstehend beschriebenen Kaffeemaschinen verfügen ferner über einen Heißdampfauslass. Dieser wird zum Erwärmen und/oder Aufschäumen von Flüssigkeiten, beispielsweise von Milch, genutzt. Zur Dampferzeugung verfügen die Kaffeemaschinen über ein manuell betätigbares Umschaltventil, damit der generierte Heißdampf nicht der Brüheinheit, sondern dem Dampfauslass zugeführt wird. Beim Umschalten auf den Heißdampfauslass ist darauf zu achten, dass die Umstellung vollständig erfolgt, da ansonsten ein Teil des Heißdampfes über den Heißwasseranschluss der Brüheinheit zugeführt und letztendlich in den zum Auffangen der ausgelaufenen Filterkuchen vorgesehenen Tresterbehälter strömt. Dieses ist unerwünscht.

Ausgehend von diesem diskutierten Stand der Technik liegt der Erfindung daher die Aufgabe zugrunde, eine eingangs genannte, gattungsgemäße Brüheinheit dergestalt weiterzubilden, dass letztendlich unabhängig von einer vollständigen Betätigung eines Wegeventils sichergestellt ist, dass bei einer gewünschten Heißdampfausgabe kein Dampf in der Brüheinheit austritt.

Diese Aufgabe wird erfindungsgemäß durch eine eingangs genannte, gattungsgemäße Brüheinheit gelöst, bei der in die Heißwasserleitung ein Einlassventil mit einem Stellorgan zum Schließen des Einlassventils eingeschaltet ist, und dass einem angetriebenen Element ein mit dem Stellorgan des Einlassventils zum Schließen desselben zusammenwirkendes Betätigungselement zugeordnet ist, das auf das Stellorgan des Einlassventils wirkt, wenn sich dieses angetriebene Element in seiner Ausgangsstellung befindet.

Bei dieser Brüheinheit ist in die Heißwasserleitung, die den Heißwasseranschluss der Brüheinheit mit dem Austritt in die Brühkammer verbindet, ein Einlassventil eingeschaltet. Dieses Einlassventil verfügt über ein Stellorgan, mit dem das Einlassventil geschlossen werden kann. Eine Betätigung des Stellorgans erfolgt bei dieser Brüheinheit durch ein im Rahmen eines Brühzyklusses ohnehin angetriebenes Element der Brüheinheit, beispielsweise dem Brühzylinder. Das im Rahmen eines Brühzyklusses zum Brühen eines Kaffeegetränks angetriebene Element der Brüheinheit verfügt über ein Betätigungselement, welches angeordnet ist, um mit dem Stellorgan des Einlassventils zum Schließen desselben zusammen zu wirken. Dabei ist vorgesehen, dass das Betätigungselement des angetriebenen Elements auf das Stellorgan des Einlassventils wirkt, wenn sich dieses bewegte Element der Brüheinheit in seiner Ausgangsstellung befindet. Das Element befindet sich dann in seiner Ausgangsstellung, wenn grundsätzlich sämtliche Elemente der Brüheinheit in ihrer Nichtgebrauchs-Stellung sind. Befindet sich die Brüheinheit bzw. die Elemente derselben in ihrer Nichtgebrauchs- bzw. Ausgangsstellung ist sodann das in die Heißwasserleitung eingeschaltete Einlassventil geschlossen. Somit kann in dieser Stellung des Einlassventils weder Heißwasser noch Heißdampf in den weiteren Abschnitt der Heißwasserleitung einströmen und innerhalb der Brüheinheit ausströmen.

Ausgenutzt wird bei dieser Brüheinheit in geschickter Weise der Umstand, dass eine Heißdampfgenerierung nur dann möglich ist, wenn sich die Brüheinheit bzw. deren bewegten Elemente in ihrer Ausgangsstellung befinden. Eine gleichzeitige Heißgetränk- und Heißdampfproduktion ist bei diesen Kaffeemaschinen nicht vorgesehen. Erst beim Durchlaufen eines Brühzyklusses, nämlich dann, wenn das mit dem Betätigungselement ausgerüstete Element der Brüheinheit im Zuge des Brühzyklusses bewegt wird, wird das Betätigungselement von dem Stellorgan des Einlassventils wegbewegt, so dass dieses anschließend geöffnet ist. Das Öffnen des Einlassventils kann entweder selbsttätig erfolgen oder durch das zum Brühen des gewünschten Kaffeegetränks zugeführte Heißwasser beziehungsweise durch den Druck, mit dem das Heißwasser zugeführt wird, geöffnet werden. Somit ist gemäß einem Ausführungsbeispiel das Einlassventil lediglich als aktiv schließbares Ventil konzipiert. Bei diesem Ausführungsbeispiel stützt sich in der Geschlossen-Stellung des Einlassventils das Stellorgan desselben an dem Betätigungselement des angetriebenen Elements der Brüheinheit ab.

Gemäß einer bevorzugten Ausgestaltung bildet das Einlassventil eine gegenständliche Einheit mit dem Heißwasseranschluss. Das Einlassventil befindet sich sodann zusammen mit dem Heißwasseranschluss an einem Rahmen oder Gestell der Brüheinheit angeordnet. Als Stellorgan des Einlassventils dient beispielsweise ein Stößel, der mit einem abgerundeten Stellkopf aus dem Gehäuse des Einlassventils herausragt. Auf den Stellkopf wirkt ein beispielsweise als Kragen ausgebildetes Betätigungselement, welches vorzugsweise über eine geneigte Stellfläche verfügt.

Nachfolgend ist die Erfindung anhand eines Ausführungsbeispiels unter Bezugnahme auf die beigefügten Figuren beschrieben. Es zeigen:
- **Fig. 1:**: einen Längsschnitt durch eine Brüheinheit für eine Kaffeemaschine mit einem Einlassventil,
- **Fig. 2:**: eine perspektivische Ansicht des Einlassventils mit einem daran angeformten Heißwasseranschluss,
- **Fig. 3:**: einen vergrößerten Längsschnitt durch das Einlassventil der Figur 2,
- **Fig. 4:**: einen Querschnitt durch das Einlassventil der Figur 2 entlang der Schnittlinie A-B der Figur 3 und
- **Fig. 5:**: einen Längsschnitt durch die Brüheinheit der Figur 1 in der Pressstellung seiner beweglichen Elemente.

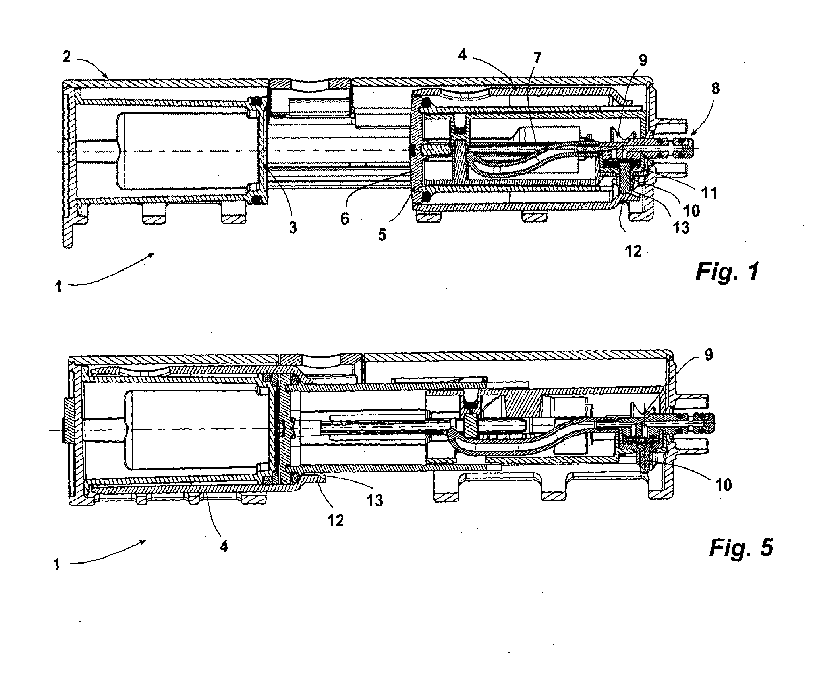

Eine Brüheinheit 1 für eine in den Figuren nicht näher dargestellte Kaffeemaschine verfügt über ein Gestell 2. Das Gestell 2 ist nach Art eines Gehäuses ausgebildet. An das Gestell 2 angeschlossen ist ein feststehender Kolben 3 mit einer in Figur 1 nicht dargestellten Kaffeeauslaufleitung. Teil der Brüheinheit 1 ist des Weiteren ein Brühzylinder 4. Der Brühzylinder 4 ist durch einen nicht dargestellten Spindelantrieb in längsaxialer Richtung bewegbar angetrieben. In dem Brühzylinder 4 ist ein beweglicher Kolben 5 angeordnet, der durch den Brühzylinder 4 ebenfalls in längsaxialer Richtung bewegbar ist. Figur 1 zeigt den Brühzylinder 4 und den bewegbaren Kolben 5 in ihrer Nichtgebrauchs- bzw. Ausgangsstellung eines Brühzyklusses. Der bewegliche Kolben 5 verfügt über einen Heißwasseraustritt im Bereich seines Kolbenbodens 6. Der Heißwasseraustritt ist in Figur 1 nicht erkennbar. Angeschlossen an die Rückseite des beweglichen Kolbens 5 ist ein Schlauch 7 als Heißwasserleitung zum Zuführen von Heißwasser von einem Heißwasseranschluss 8 zu dem Heißwasseraustritt im Bereich des Kolbenbodens 6 des beweglichen Kolbens 5. Der Heißwasseranschluss 8 ist an dem Gestell 2 festgesetzt. Mit dem Heißwasseranschluss 8 eine gegenständliche Einheit bildend ist in die Heißwasserleitung ein Einlassventil 9 eingeschaltet. Bei dem Einlassventil 9 handelt es sich um ein Membranventil, welches bezüglich seiner Einzelheiten im Folgenden beschrieben ist. Als Stellorgan verfügt das Einlassventil 9 über einen Stößel 10, der unterseitig aus dem Gehäuse 11 des Einlassventils 9 herausragt.

Der Brühzylinder 4 als motorisch angetrieben bewegbares Element der Brüheinheit 1 trägt im Bereich seines zu dem Heißwasseranschluss 8 weisenden Endes einen Betätigungskragen 12 mit einer zum Heißwasseranschluss 8 weisenden geneigten Stellfläche 13. In der in Figur 1 gezeigten Stellung stützt sich der Stößel 10 des Einlassventils 9 auf der Oberseite des Betätigungskragens 12 ab, wodurch das Einlassventil 9 verschlossen ist. Beginnt ein Brühzyklus zum Bereiten eines Kaffeegetränks wird der Brühzylinder 4 in Richtung zu den feststehendem Kolben 3, wie durch den Pfeil in Figur 1 angedeutet, verfahren. Dabei wird der Betätigungskragen 12 von dem Stößel 10 des Einlassventils 9 wegbewegt, so dass der Stößel 10 nicht mehr gegen den Betätigungskragen als Widerlager wirkt. Tritt Heißwasser über den Heißwasseranschluss 8 ein, öffnet das Einlassventil 9 selbsttätig aufgrund des Druckes, mit dem das Heißwasser gefördert wird. Die vorbeschriebene Stellung der bewegbaren Elemente der Brüheinheit 1 ist in Figur 5 dargestellt. Figur 5 zeigt die Brüheinheit 1 in der Pressstellung des Brühlzylinders 4 sowie des beweglichen Kolbens 5. Die in Figur 5 dargestellte Stellung des beweglichen Kolbens 5 gegenüber dem feststehenden Kolben 3 zeigt die Stellung dieser beiden Elemente 3, 5, wenn kein Kaffee in die zwischen diesen beiden Kolben befindliche Brühkammer eingebracht ist. Bei der Bereitung eines Kaffeegetränkes befindet sich zwischen den beiden Kolben 3, 5 Kaffeepulver.

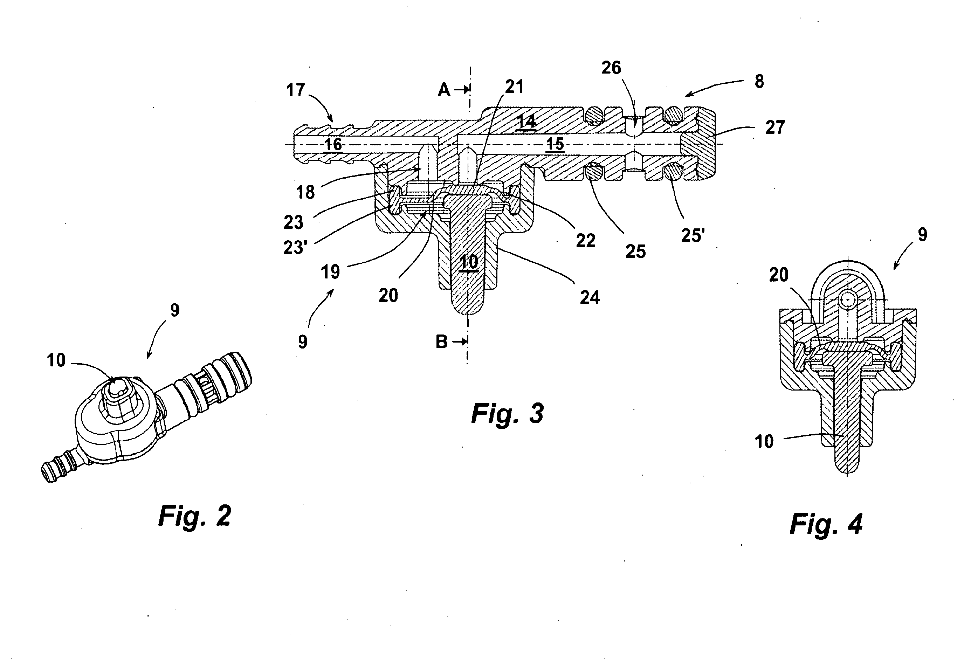

Figur 2 zeigt das Einlassventil 9 in einer perspektivischen Darstellung, und zwar mit seinem Stößel 10 nach oben weisend.

Figur 3 zeigt in einem vergrößerten Längsschnitt das Einlassventil 9 mit dem daran angeformten Heißwasseranschluss 8. Das Einlassventil 9 besteht aus einem Grundkörper 14, dem auch der Heißwasseranschluss 8 zugehörig ist. In dem Grundkörper 14 sind der Längserstreckung des Einlassventils 9 folgend ein Einlasskanal 15 und ein Auslasskanal 16 eingebracht. Der Auslasskanal 16 mündet in einem Schlauchkupplungsstück 17, auf dem der Schlauch 7, wie in Figur 1 erkennbar, aufgeschoben ist. Der Einlasskanal 15 und der Auslasskanal 16 sind durch eine U-förmige Wegsamkeit 18 getrennt. Die U-förmige Wegsamkeit 18 beinhaltet eine Ventilkammer 19, in der eine Membran 20 als Elastomerformteil angeordnet ist. Die Membran 20 verfügt über einen verdickten Abschnitt 21. Dieser befindet sich unterhalb des an den Einlasskanal 15 angeschlossenen Teils der Wegsamkeit 18. Der Abschnitt 21 der Membran 20 dient als Dichtelement, das in der in Figur 3 gezeigten Geschlossen-Stellung des Einlassventils 9 gegen einen wulstartigen Ventilsitz 22 des Grundkörpers 14 abgedichtet wirkt. In dieser in Figur 3 gezeigten Stellung stützt sich der Stö-ßel 10 unterseitig an den Betätigungskragen 12 (in Figur 3 nicht dargestellt) des Brühzylinders 4 ab, und zwar in einer Art und Weise, dass über den Stößel 10 der Abschnitt 21 der Membran 20 unter einer gewissen Vorspannung an dem Ventilsitz 22 anliegt. Die Membran 20 trägt außenseitig gegenseitig voneinander gegenüberliegend abragende Befestigungsschenkel 23, 23', die in einer durch den Grundkörper 14 und einer unterseitigen Abdeckung 24 gebildeten Kammer aufgenommen sind. Die Membran 20 bzw. ihr Abschnitt 21 ist in vertikaler Richtung gemäß der Darstellung in der Figur 3 bewegbar.

Ist die Brühkammer 4 mit ihrem Betätigungskragen 12 aus ihrer in Figur 1 gezeigten Ausgangsstellung wegbewegt worden, findet der Stößel 10 kein Widerlager mehr. Steht dann in dem Einlasskanal 15 unter Druck stehendes Heißwasser an, drückt dieses den Abschnitt 21 von dem Ventilsitz 22 weg, so dass das Heißwasser durch den Ventilraum 19 hindurch, in den Auslasskanal 16 hinein und anschließend in den Schlauch 7 strömen kann. Wird der Brühzyklus beendet, wird die Brühkammer 4 wieder in ihre in Figur 1 gezeigte Stellung gefahren, in der unterhalb des Stößels 10 der Betätigungskragen 12 sitzt und durch den im Zuge des Einfahrens des Brühzylinders in seine Ausgangsstellung der Stößel 10 unter Mitnahme des Abschnitts 21 der Membran 20 in Richtung zum Ventilsitz 22 bewegt wird, so dass die Membran 20 bzw. ihr Abschnitt 21 abgedichtet am Ventilsitz 22 anliegt.

Eine Heißdampfzubereitung ist bei dieser Kaffeemaschine nur möglich, wenn die bewegbaren Elemente der Brüheinheit sich in ihrer in Figur 1 gezeigten Ausgangsstellung befinden. Gewährleistet ist dies durch eine entsprechende elektrische/elektronische Überwachung. Durch das in dieser Stellung geschlossene Einlassventil 9 ist sichergestellt, dass weder Heißwasser noch Heißdampf in dieser Stellung das Einlassventil 9 durchströmen kann.

Figur 4 zeigt das Einlassventil 9 in einem Schnitt entlang der Linie A-B der Figur 3. Aus einer Zusammenschau der Schnitte der Figuren 3 und 4 wird erkennbar, dass die Membran eine ovale, eiförmige Form einnimmt.

Der Grundkörper 14 und die Abdeckung 24 bestehen vorzugsweise aus Kunststoff. Diese sind bei dem dargestellten Ausführungsbeispiel an ihrer Stoßstelle durch Ultraschall miteinander verschweißt. Diese Verbindung genügt auch den an eine Abdichtung gestellten Anforderungen, insbesondere auch solchen, wenn das Heißwasser unter Druck zugeführt wird.

Der Heißwasseranschluss 8 verfügt bei dem dargestellten Ausführungsbeispiel über eine radiale Heißwasserzuführung, weshalb zwischen zwei Dichtringen 25, 25' eine den Einlasskanal 15 querende Querbohrung 26 vorgesehen ist. Das Ende des Einlasskanals 15 ist mit einer Kappe 27 abgedichtet verschlossen.

### Bezugszeichenliste

- 1: Brüheinheit
- 2: Gestell
- 3: feststehender Kolben
- 4: Brühzylinder
- 5: beweglicher Kolben
- 6: Kolbenboden
- 7: Schlauch
- 8: Heißwasseranschluss
- 9: Einlassventil
- 10: Stößel
- 11: Gehäuse
- 12: Betätigungskragen
- 13: Stellfläche
- 14: Grundkörper
- 15: Einlasskanal
- 16: Auslasskanal
- 17: Schlauchkupplungsstück
- 18: U-förmige Wegsamkeit
- 19: Ventilkammer
- 20: Membran
- 21: Abschnitt
- 22: Ventilsitz
- 23, 23': Befestigungsschenkel
- 24: Abdeckung
- 25, 25': Dichtring
- 26: Querbohrung
- 27: Abdeckkappe

## Patentansprüche

1. Brüheinheit für eine Kaffeemaschine mit einem Heißwasseranschluss (8) und einem gegenüber dem Heißwasseranschluss (8) motorisch im Rahmen des Durchlaufens eines Brühzyklusses angetriebenen Elements, etwa einem Brühzylinder (4), an welchen Heißwasseranschluss (8) eine Heißwasserleitung (7) zum Zuführen von der Brüheinheit (1) zugeführten Heißwasser in eine Brühkammer angeschlossen ist, **dadurch gekennzeichnet, dass** in die Heißwasserleitung (7) ein Einlassventil (9) mit einem Stellorgan (10) zum Schließen des Einlassventils (9) eingeschaltet ist, und dass einem angetriebenen Element (4) ein mit dem Stellorgan (10) des Einlassventils (9) zum Schließen desselben zusammenwirkendes Betätigungselement (12) zugeordnet ist, das auf das Stellorgan (10) des Einlassventils (9) wirkt, wenn sich dieses angetriebene Element (4) in seiner Ausgangsstellung befindet.

2. Brüheinheit nach Anspruch 1, **dadurch gekennzeichnet, dass** das Einlassventil (9) mit dem Heißwasseranschluss (8) eine gegenständliche Einheit bildet.

3. Brüheinheit nach Anspruch 1 oder 2, **dadurch gekennzeichnet, dass** die Brüheinheit (1) einen motorisch angetrieben bewegten Brühzylinder (4), einen feststehenden Kolben (3) und einen durch den Brühzylinder (4) bewegten Kolben (5) aufweist und dass das Betätigungselement (12) Teil des Brühzylinders (4) ist.

4. Brüheinheit nach Anspruch 3, **dadurch gekennzeichnet, dass** der Brühzylinder an seinem zum Heißwasseranschluss weisenden Ende eine Stellfläche (12) zum Betätigen des Stellorgans (10) des Einlassventils (9) aufweist.

5. Brüheinheit nach Anspruch 4, **dadurch gekennzeichnet, dass** das Stellorgan (10) des Einlassventils (9) sich auf der Stellfläche (12) des Betätigungselements (4) des Brühzylinders (4) in der Geschlossen-Stellung des Einlassventils (9) abstützt.

6. Brüheinheit nach einem der Ansprüche 1 bis 5, **dadurch gekennzeichnet, dass** das Einlassventil (9) ein Membranventil mit einer innerhalb einer Ventilkammer (19) angeordneten Membran (20) ist und auf die Membran (20) das Stellorgan (10) zum Bewegen der Membran (20) in die Einlassventil-Geschlossen-Stellung wirkt.

7. Brüheinheit nach Anspruch 6, **dadurch gekennzeichnet, dass** die Membran (20) ein Elastomerformteil mit einem verdickten mittleren, in der Geschlossen-Stellung am Ventilsitz (22) anliegenden Abschnitt (21) ist.

8. Brüheinheit nach Anspruch 6 oder 7, **dadurch gekennzeichnet, dass** die Membran (20) zwei umlaufende, aus der Ebene der Membran in beide Richtungen entgegengesetzt abragende Befestigungsschenkel (23, 23') aufweist, die zum Festsetzen der Membran (20) in dem Einlassventil (9) in einer Ringkammer gehalten sind.

9. Kaffeemaschine mit einer Brüheinheit nach einem der Ansprüche 1 bis 8, **dadurch gekennzeichnet, dass** die Brüheinheit (1) von der Kaffeemaschine lösbar angeordnet ist.

10. Kaffeemaschine nach Anspruch 9, **dadurch gekennzeichnet, dass** die Kaffeemaschine ein zum Heißwasseranschluss (8) der Brüheinheit (1) komplementäres Kupplungselement aufweist, in das der Heißwasseranschluss (8) der Brüheinheit (1) beim Einsetzen derselben in die Kaffeemaschine eingeführt wird.

## Claims

1. Brewing unit for a coffee machine having a hot water connection (8) and an element, for instance a brewing cylinder (4), which is driven relative to the hot water connection (8) by a motor during a brewing cycle, a hot water line (7) for conducting hot water supplied from the brewing unit (1) into a brewing chamber being connected to said hot water connection (8), **characterized in that** an inlet valve (9) with an adjusting member (10) for closing the inlet valve (9) is connected into the hot water line (7), and **in that** an actuating element (12), which interacts with the adjusting member (10) of the inlet valve (9) for closing the same, is associated with a driven element (4) and acts upon the adjusting member (10) of the inlet valve (9) when said driven element (4) is situated in its initial position.

2. Brewing unit according to Claim 1, **characterized in that** the inlet valve (9) forms a clear unit with the hot water connection (8).

3. Brewing unit according to Claim 1 or 2, **characterized in that** the brewing unit (1) has a brewing cylinder (1) moved in a motor-driven manner, a fixed piston (3) and a piston (5) moved by the brewing cylinder, and **in that** the actuating element (12) is part of the brewing cylinder (4).

4. Brewing unit according to Claim 3, **characterized in that** at its end pointing to the hot water connection, the brewing cylinder has a control face (12) for actuating the adjusting member (10) of the inlet valve (9).

5. Brewing unit according to Claim 4, **characterized in that** the adjusting member (10) of the inlet valve (9) is supported on the control face (12) of the actuating member (4) of the brewing cylinder (4) in the closed position of the inlet valve (9).

6. Brewing unit according to one of Claims 1 to 5, **characterized in that** the inlet valve (9) is a diaphragm valve with a diaphragm (20) located within a valve chamber (19) and the adjusting member (10) acts on the diaphragm (20) to move the diaphragm (20) into the inlet valve closed position.

7. Brewing unit according to Claim 6, **characterized in that** the diaphragm (20) is an elastomer moulded part with a thickened central portion (21) that abuts against the valve seat (22) in the closed position.

8. Brewing unit according to Claim 6 or 7, **characterized in that** the diaphragm (20) has two circumferential securing legs (23, 23'), which protrude from the plane of the diaphragm in two directions opposite one another and are held in an annular bracket for securing the diaphragm (10) in the inlet valve (9).

9. Coffee machine with a brewing unit according to one of Claims 1 to 8, **characterized in that** the brewing unit (1) is located so as to be detachable from the coffee machine.

10. Coffee machine according to Claim 9, **characterized in that** the coffee machine has a coupling element that is complementary to the hot water connection (8) of the brewing unit (1), the hot water connection (8) of the brewing unit (1) being introduced into said coupling element when said brewing unit is inserted into the coffee machine.

## Revendications

1. Unité d'échaudage pour une machine à café avec un raccordement (8) d'eau chaude et, à l'opposé du raccordement (8) d'eau chaude, un élément entraîné par motorisation dans le cadre du déroulement d'un cycle d'échaudage, par exemple un cylindre d'échaudage (4), auquel raccordement (8) d'eau chaude est raccordée une conduite (7) d'eau chaude destinée à acheminer l'eau chaude en provenance de l'unité d'échaudage (1) dans une chambre d'infusion, **caractérisée en ce qu'**un robinet d'admission (9) muni d'un organe de positionnement (10) destiné à fermer le robinet d'admission (9) est prévu sur la conduite (7) d'eau chaude et **en ce qu'**un élément de manoeuvre (12) agissant sur l'organe de positionnement (10) du robinet d'admission (9) afin de fermer ce dernier est affecté à un élément entraîné (4) et agit sur l'organe sur l'organe de positionnement (10) du robinet d'admission (9) lorsque cet élément entraîné (4) se trouve dans sa position initiale.

2. Unité d'échaudage selon la revendication 1 **caractérisée en ce que** le robinet d'admission (9) constitue une entité d'objet avec le raccordement (8) d'eau chaude.

3. Unité d'échaudage selon les revendications 1 ou 2 **caractérisée en ce que** l'unité d'échaudage (1) comprend un cylindre d'échaudage (4) mobile entraîné par un moteur, un piston (3) fixe et un piston (5) mis en mouvement par le cylindre d'échaudage (4) et **en ce que** l'élément de manoeuvre (12) est une partie du cylindre d'échaudage (4).

4. Unité d'échaudage selon la revendication 3, **caractérisée en ce que** le cylindre d'échaudage comprend une surface de positionnement (13) à son extrémité orientée vers le raccordement d'eau chaude afin d'actionner l'organe de positionnement (10) du robinet d'admission (9).

5. Unité d'échaudage selon la revendication 4 **caractérisée en ce que** l'organe de positionnement (10) du robinet d'admission (9) s'appuie en position fermée du robinet d'admission (9) sur la surface de positionnement (13) de l'élément de manoeuvre (12) du cylindre d'échaudage (4).

6. Unité d'échaudage selon l'une des revendications 1 à 5 **caractérisée en ce que** le robinet d'admission (9) est un robinet à membrane comportant une membrane (20) disposée dans le corps du robinet (19) et sur laquelle membrane (20) l'organe de positionnement (10) agit dans la position fermée du robinet d'admission pour déplacer la membrane (20)

7. Unité d'échaudage selon la revendication 6 **caractérisée en ce que** la membrane (20) est une pièce moulée en élastomère avec un tronçon (21) central épaissi qui, en position fermée du robinet, est en appui contre le siège (22).

8. Unité d'échaudage selon les revendications 6 ou 7 **caractérisée en ce que** la membrane (20) comporte deux bras de fixation (23, 23') périphériques, en saillie dans les deux directions opposées par rapport au plan de la membrane, qui sont destinés à maintenir la membrane (20), dans le robinet d'admission (9), dans une cavité circulaire.

9. Machine à café avec une unité d'échaudage selon l'une des revendications 1 à 8 **caractérisée en ce que** l'unité d'échaudage (1) est disposée de façon amovible sur la machine à café.

10. Machine à café selon la revendication 9 **caractérisée en ce que** la machine à café comporte un élément de couplage complémentaire au raccordement (8) d'eau chaude de l'unité d'échaudage (1) dans lequel est introduit le raccordement (8) d'eau chaude de l'unité d'échaudage (1) lors de la mise en place de cette dernière dans la machine à café.
